# EUROPÄISCHE PATENTANMELDUNG

(11) **EP 4 851 884 A1**
(43) Veröffentlichungstag der Anmeldung: **09.12.2026**
(21) Anmeldenummer: 26171892.8
(22) Anmeldetag: 13.04.2026
(51) Int. Cl.: G06Q 10/063

(54) **MULTIMODALES AGENTEN-SYSTEM ZUR ÜBERWACHUNG UND STEUERUNG EINER MASCHINENLINIE**

(30) Priorität: 05.06.2025 DE 102025122175
(71) Anmelder: Krones AG, 93073 Neutraubling (DE)
(72) Erfinder: Diebold, Franz, 93073 Neutraubling (DE)
(74) Vertreter: Grünecker Patent- und Rechtsanwälte PartG mbB

(57) **Zusammenfassung**

Die Erfindung betrifft ein computerimplementiertes Verfahren und System zum Überwachen und Steuern komplexer Maschinenlinien, insbesondere eine Maschinenlinie zum Abfüllen und Verpacken von Lebensmitteln und/oder Getränken. Gemäß Ausführungsformen werden eine Vielzahl von KI-Agenten von einem Computer ausgeführt, die in einer multimodalen Kommunikation verschiedene Datenquellen in unterschiedlichen Formaten überwachen und durchsuchen, um technische Probleme in der Maschinenlinie zu identifizieren und zu lösen. Die KI-Agenten umfassen dabei wenigstens einen multimodalen Überwachungs-Agenten, einen multimodalen Planungs-Agenten, optional wenigstens einen Kritik-Agenten und einen Ausführungs-Agenten.

## Beschreibung

Die Erfindung betrifft ein computerimplementiertes Verfahren und System zum Überwachen und Steuern einer Maschinenlinie, insbesondere eine Maschinenlinie zum Abfüllen und Verpacken von Lebensmitteln und/oder Getränken.

Die Überwachung und Steuerung von Maschinenlinien, insbesondere von komplexen industriellen Anlagen wie Getränkeabfüllanlagen, stellt eine zunehmende Herausforderung dar. In modernen Produktionsumgebungen steigt sowohl die Anzahl als auch die Komplexität der einzelnen Komponenten, wodurch die Gesamtstruktur der Maschinenlinien erheblich komplexer wird. Dies führt dazu, dass die Anforderungen an die Überwachung, Steuerung und Optimierung dieser Anlagen kontinuierlich steigen.

Parallel dazu sehen sich die Betreiber solcher Anlagen einem erheblichen wirtschaftlichen Druck ausgesetzt. Die Notwendigkeit zur Effizienzsteigerung, Kostensenkung und Qualitätssicherung erfordert es, die bestehenden Systeme kontinuierlich weiterzuentwickeln und zu optimieren. Die Verfügbarkeit von qualifiziertem Personal, das in der Lage ist, solch komplexe Produktionsprozesse zu steuern und auf Störungen angemessen zu reagieren, ist nicht immer gegeben. Daraus resultiert ein verstärkter Bedarf an hochgradiger Automatisierung und intelligenter Unterstützungssysteme.

Zur Erhöhung des Automatisierungsgrades werden bereits regelbasierte Ansätze eingesetzt. Solche Systeme beruhen darauf, vordefinierte Regeln und Entscheidungsbäume zu implementieren, um wiederkehrende Aufgaben zu automatisieren und Fehlerquellen zu minimieren. Diese Verfahren haben sich bereits in vielen Anwendungsbereichen bewährt und tragen zur Reduzierung des personellen Aufwandes sowie zur Verbesserung der Produktionssicherheit bei, stoßen jedoch in komplexen Maschinenlinien schnell an ihre Grenzen. Insbesondere bei Getränkeabfüllanlagen, bei denen zahlreiche Maschinen und Prozessschritte präzise aufeinander abgestimmt sein müssen, treten eine Vielzahl von Abhängigkeiten auf. Diese komplexen Abhängigkeiten erhöhen die Systemkomplexität erheblich. Schon geringe Abweichungen oder Störungen in einem Teilprozess können sich auf nachgelagerte Prozesse auswirken und die gesamte Produktionslinie beeinträchtigen.

Ein weiteres Problem besteht darin, dass die zur Steuerung und Überwachung benötigten Informationen oft auf verschiedene Systeme und Quellen verteilt sind. Diese Informationen liegen zudem meist in unterschiedlichen Formaten vor, beispielsweise als strukturierte Textdaten, Bilder, Videos oder Messdaten. Die heterogene Natur dieser Daten erschwert eine konsistente und umfassende Auswertung und Interpretation mit klassischen Methoden erheblich. Bekannte Ansätze, die sich auf eine einzelne Datenquelle oder einen Datentyp beschränken, sind daher nicht in der Lage, die gesamte Komplexität der Situation adäquat abzubilden.

Mit dem steigenden Automatisierungsgrad wachsen auch die Anforderungen an die Flexibilität und Anpassungsfähigkeit der Systeme. Problemstellungen werden zunehmend komplexer und dynamischer, wodurch klassische Systeme leicht überfordert sein können. Sie stoßen an ihre Grenzen hinsichtlich der Fähigkeit, neuartige Situationen zu erfassen und angemessen zu reagieren. Dies führt in der Praxis zu einer erhöhten Störanfälligkeit, längeren Ausfallzeiten und ineffizienten Produktionsabläufen.

Es besteht daher Bedarf für verbesserte Verfahren und Systeme zum Überwachen und Steuerung von Maschinenlinien.

Die Aufgabe wird erfindungsgemäß durch ein computerimplementiertes Verfahren gemäß Anspruch 1, ein computerlesbares Speichermedium gemäß Anspruch 9 und ein System gemäß Anspruch 10 gelöst. Ausführungsformen und Weiterbildungen sind in den Unteransprüchen erfasst.

Eine Ausführungsform betrifft ein computerimplementiertes Verfahren zum Überwachen und Steuern komplexer Maschinenlinien, insbesondere eine Maschinenlinie zum Abfüllen und Verpacken von Lebensmitteln und/oder Getränken. Das Verfahren umfasst das Ausführen einer Vielzahl von KI-Agenten. Die KI-Agenten umfassen dabei wenigstens einen multimodalen Überwachungs-Agenten, einen multimodalen Planungs-Agenten, optionalerweise wenigstens einen Kritik-Agenten und einen Ausführungsagenten. Der multimodale Überwachungs-Agent ist zum Überwachen einer Vielzahl von Datenquellen einer Maschinenlinie ausgelegt. Die Vielzahl von Datenquellen umfasst eine Vielzahl von Informationen bezüglich der Maschinenlinie in unterschiedlichen Formaten. Beispiele hierfür sind strukturierter Text, unstrukturierter Text, Bilder, Videos oder Audio. Des Weiteren ist der multimodale Überwachungs-Agent ausgelegt zum Erkennen, basierend auf der Überwachung der Vielzahl von Datenquellen, eines ungelösten technischen Problems im Betrieb der Maschinenlinie, und zum Kommunizieren des ungelösten technischen Problems an den multimodalen Planungs-Agenten. Der multimodale Planungs-Agent ist ausgelegt zum Zugreifen auf einen Systemzustand der Maschinenlinie. Dieser kann beispielsweise in einer Datenbank gespeichert sein. Des Weiteren ist der Planungs-Agent ausgelegt zum Erstellen eines Plans zur Lösung des ungelösten technischen Problems basierend auf Informationen aus der Vielzahl von Datenquellen, und zum Kommunizieren des Plans an den wenigstens einen optionalen Kritik-Agenten und an den Ausführungsagenten. Dabei kann der multimodale Planungs-Agent nach einer Kommunikation mit einem oder mehreren optionalen Kritik-Agenten den Plan basierend auf einer Rückmeldung von dem wenigstens einen Kritik-Agenten anpassen. Der wenigstens eine optionale Kritik-Agent ist ausgelegt zum Kommunizieren mit dem multimodalen Planungs-Agenten und zum Analysieren des Plans basierend auf einer oder mehrerer vorgegebenen Randbedingungen. Der Ausführungs-Agent ist ausgelegt zum Ausführen des Plans mittels einer Maschinenschnittstelle, um die Maschinenlinie gemäß dem Plan zu steuern.

Weitere Ausführungsformen der Erfindung betreffen ein entsprechendes System und computerlesbares Speichermedium.

Beispielhafte Aspekte der Erfindung sind in den Zeichnungen dargestellt. Es zeigen:
**Figur 1****:** eine beispielhafte schematische Darstellung einer Integration eines Multi-Agenten-Systems in eine Maschinenlinie;
**Figur 2****:** eine beispielhafte Anlagenkonfiguration für PET-Behälter und Klebegebinde;
**Figur 3****:** eine beispielhafte Anlagenkonfiguration für PET-Behälter und Schrumpfpacker;
**Figur 4****:** eine beispielhafte Anlagenkonfiguration für Dosen oder Glasflaschen; und
**Figur 5****:** eine beispielhafte Anlagenkonfiguration für Dosen.

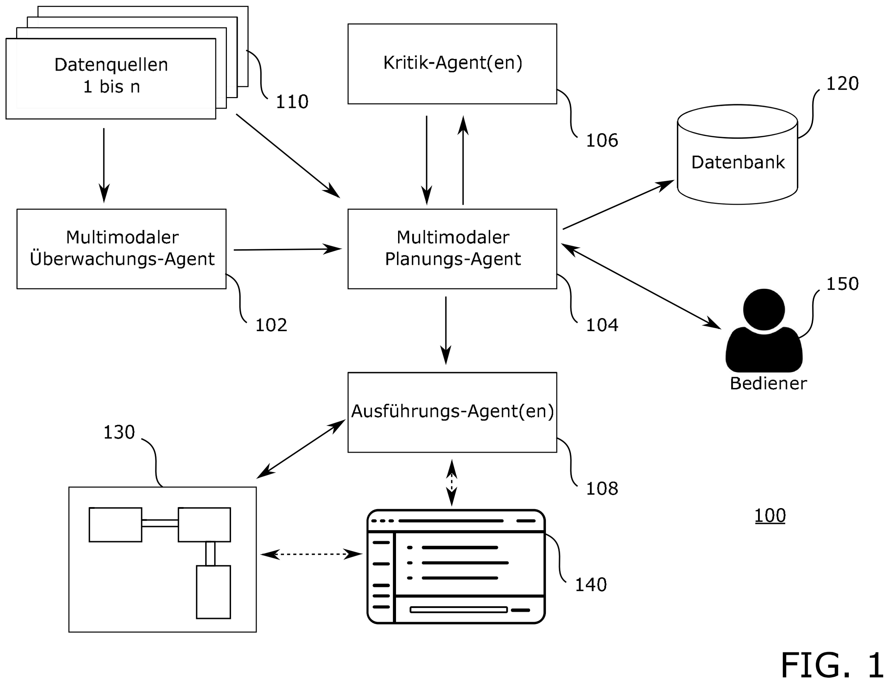

Beispielhafte Ausführungsformen zeigen ein multimodales Agenten-System, das Lösungsmöglichkeiten bietet, um die Komplexität und Multimodalität stark automatisierter Maschinenlinien zu beherrschen. Figur 1 zeigt eine beispielhafte schematische Darstellung einer Integration eines Multi-Agenten-Systems 100 in oder für eine Maschinenlinie 130.

Das Agenten-System 100 besteht aus mehreren Kl-Agenten 102 - 108, die unterschiedliche Rollen im Gesamtsystem übernehmen. Die Kl-Agenten 102 - 108 können beispielsweise über Schnittstellen miteinander verbunden sein und können somit eine Gesamtaufgabe bzw. ein größeres und komplexeres Problem in der technischen Umgebung der Maschinenlinie 130 gemeinsam lösen.

Die Erfindung wird dabei von einer Computervorrichtung ausgeführt, die die Vielzahl von KI-Agenten 102 - 108 implementiert. Die Kl-Agenten können jeweils beispielsweise speziell für ihren Einsatz trainierte neuronale Netze sein, und/oder können auch Large-Language-Modelle sein oder umfassen. Auch wenn im Folgenden die KI-Agenten als einzelne Agenten beschrieben und behandelt werden, ist zu verstehen, dass die einzelnen KI-Agenten auch innerhalb von einem oder mehreren KI-Agenten implementiert werden können.

Die Vielzahl von Kl-Agenten 102 - 108 umfassen wenigstens einen multimodalen Überwachungs-Agenten 102, einen multimodalen Planungs-Agenten 104, und einen Ausführungsagenten 108. In manchen Ausführungsformen können die Kl-Agenten auch wenigstens einen Kritik-Agenten 106 umfassen. Wie weiter unten noch beschrieben, können die Kritik-Agenten 106 eine Vielzahl von unterschiedlich ausgeprägten Kritik-Agenten umfassen und die Ausführungs-Agenten 108 können eine Vielzahl von unterschiedlich ausgeprägten Ausführungs-Agenten umfassen. Dies ist für unterschiedliche Maschinen und/oder Randbedingungen und/oder Optimierungspräferenzen vorteilhaft.

Der multimodale Überwachungs-Agent 102 ist ausgelegt zum Überwachen einer Vielzahl von Datenquellen (1 bis n) 110 einer Maschinenlinie. Die Vielzahl von Datenquellen 110 umfasst eine Vielzahl von Informationen bezüglich der Maschinenlinie 130 in unterschiedlichen Formaten. Beispiele für die Datenquellen 110 können sein: eine IIOT Plattform, die KPIs, Meldungen, und Sensordaten umfasst, Live-Video-Bilder der Maschinenlinie 130, Arbeitsanweisungen, Betriebsanleitungen (als PDF, Bild, Video, Text, etc.) oder externe Systeme, wie Auftragssysteme, Emails, CRM-Systeme, etc.

Die Informationen in den Datenquellen 110 kann gemäß Ausführungsformen in Form einer Vektor-Datenbank in einem latenten Raum codiert sein. Der multimodale Überwachungs-Agent 102 und/oder der multimodale Planungs-Agent 104 können auf die Informationen in der Vektor-Datenbank zugreifen, um eine kontext-bezogene Suche durchzuführen.

Die KI-Agenten 102 - 108 können mit unterschiedlichen Eingabeformaten der Datenquellen 110 umgehen und diese "verstehen". Mögliche Formate können sein:
- Strukturierter Text: JSON, XML, CSV (v.a. über APls/Schnittstellen aus anderen Systemen);
- Unstrukturierter Text: E-Mails, Wiki-Einträge, in menschlicher Sprache beschriebene Lösungen von Problemen in der Linie;
- Bilder (z.B. aus Arbeitsanweisungen, Dokumentationen, live aus der Maschinenlinie, etc.);
- Videos (z.B. live aus der Maschinenlinie, aus Arbeitsanweisungen, Standard Operating Procedures (SOPs), Dokumentationen);
- Audio (z.B. menschliche Sprache, Sensoren in der Linie);

Der multimodale Überwachungs-Agent 102 erkennt, basierend auf der Überwachung der Vielzahl von Datenquellen 110, ein ungelöstes technischen Problem im Betrieb der Maschinenlinie und kommuniziert dieses ungelöste technische Problem an den multimodalen Planungs-Agenten 104. Das Erkennen des ungelösten technischen Problems im Betrieb der Maschinenlinie 130 kann beispielsweise das Erkennen einer Abweichung von einem Sensorwert in der Maschinenlinie 130, das Erkennen einer Anomalie in der Maschinenlinie 130, oder das Erkennen einer Änderung von Planungsdaten für die Maschinenlinie 130 umfassen.

Beispielsweise kann der multimodale Überwachungs-Agent 102 eine Benachrichtigung im IIoT-System erfassen, die meldet, dass es beim Blasprozess von PET-Behältern vermehrt zu geplatzten Flaschen kam. Außerdem könnte der Überwachungs-Agent 102 aus dem Auftrags-System die Information erfassen, dass die bestellte Auslieferungsmenge nur schwer erreichbar ist und die Ziel-Kosten nur schwer zu erreichen sind. Mit diesen Problemen tritt der multimodale Überwachungs-Agent 102 an den multimodalen Planungs-Agenten 104 heran, der einen Problemlösung vorschlagen soll.

Der multimodale Planungs-Agent 104 ist ausgelegt zum Zugreifen auf einen Systemzustand der Maschinenlinie. Beispielsweise kann der Systemzustand in regelmäßigen Abständen in einer Datenbank 120 gespeichert werden. Basierend auf Informationen aus der Vielzahl von Datenquellen und möglicherweise basierend auf den Zustandsdaten aus der Datenbank 120 kann der multimodale Planungs-Agent 104 dann einen Plan zur Lösung des ungelösten technischen Problems erstellen.

Dabei kann der multimodale Planungs-Agent 104 auch gezielt Fragen an einen Bediener 150 stellen, um eventuelle Informationslücken zu schließen. Durch den Einbezug von Menschen in das Gesamtsystem ("Human-in-the-loop") können die beteiligten Personen über Geschehnisse und automatisiert ausgeführte Aufgaben benachrichtigt werden. Zudem können Rückfragen gestellt werden (z.B. wenn zusätzliche, nicht automatisiert abrufbare Informationen benötigt werden), oder konkrete Aufgaben erteilt werden, die nur durch den Menschen ausführbar sind.

Anknüpfend an das obere Beispiel kann der multimodale Planungs-Agent 104 aus den anderen KPIs und den Kamerabildern und Sensorwerten aus der Maschinenlinie 130 schlussfolgern, dass Parameter der Blaskurve verändert werden müssen. Aus Arbeitsanweisungen (z.B. PDF-Dokumente mit Bildern) kann der multimodale Planungs-Agent nachvollziehen, welche Werte in welcher Art und Weise verändert werden müssen.

Gemäß Ausführungsformen kann der Plan an den wenigstens einen Kritik-Agenten 106 kommuniziert werden. Durch die Interaktion zwischen multimodalem Planungs-Agent 106 und Kritik-Agent(en) 106 wird der Plan basierend auf der Rückmeldung von dem wenigstens einen Kritik-Agenten 106 angepasst. Der Kritik-Agent 106 kann beispielsweise ausgelegt sein zum Analysieren des Plans basierend auf einer oder mehrerer vorgegebenen Randbedingungen und/oder Optimierungszielen und/oder auf weiteren Daten aus den Datenquellen 110. Anknüpfend an das obere Beispiel kann der Kritik-Agent 106 mit einbezogen werden, der beispielsweise darauf hinweist, dass die verwendete Vorformling-Charge für die Herstellung von PET-Flaschen je nach Hersteller unterschiedlich zu verwenden ist. Somit kann der Planungs-Agent 104 daraufhin im CRM- oder Auftragssystem Informationen (d.h. in den Datenquellen 110) zum Hersteller der aktuell verwendeten Vorformlinge abrufen und die Blaskurven-Parameter mit denen vergleichen, die bei der letzten Charge dieses Herstellers verwendet wurden.

Durch die Kommunikation zwischen multimodalem Planungs-Agenten 104 und Kritik-Agenten 106 kann eine deutliche Verbesserung der dem erstellten Plan zugrundeliegenden technischen Lösung erhalten werden, da durch sogenanntes Reasoning von Sprachmodellen (z.B. LLMs) weitere Tokens zur Optimierung der Genauigkeit der Antwort aufgewendet werden. So können verschiedene Optimierungen und Präferenzen erreicht und erfüllt werden.

Der Ausführungs-Agent 108 erhält schließlich den erstellten und gegebenenfalls mittels Kritik-Agent 106 optimierten Plan und ist ausgelegt zum Ausführen des Plans mittels einer Maschinenschnittstelle, um die Maschinenlinie gemäß dem Plan zu steuern.

Die Ausführung der geplanten Aktionen des Plans wird je nach Ziel-System an unterschiedliche Ausführungs-Agenten 108 gegeben.

Wenn beispielsweise in externen System Veränderungen vorgenommen werden müssen, dann kann der Ausführungs-Agent 108 für externe Systeme verwendet werden. Dieser ist mit Werkzeugen ausgestattet, mit denen er beispielsweise APIs aufrufen kann, oder andere Änderungen (z.B. im CRM-System) vornehmen kann.

Bei Änderungen an den Maschinen (Maschineneinstellungen, Parametrisierung, etc.) der Maschinenlinie 130 kann ein Ausführungs-Agent 108 mit direkter Maschinenanbindung (z.B. OPC-UA) verwendet werden, welcher die entsprechenden Änderungen/Anpassungen direkt an der Maschine / Maschinenlinie 130 vornehmen kann.

Falls dies nicht möglich ist, kann als Ersatz auch ein multimodales Modell / ein multimodaler Agent als "universelle Maschinen-Schnittstelle" verwendet werden. Dieser kann an die Ein- und Ausgabe eines HMI 140 angebunden werden. Die Ausgabe kann hier beispielsweise mittels Screenshot erfolgen. Das multimodale Modell kann den Inhalt des Bildschirms lesen (unabhängig von der darunter verwendeten Technologie), genau wie dies auch ein Mensch am HMI 140 tun würde. Die Eingabe findet dann über (virtuelles) "klicken" (vgl. Maus) an bestimmten Koordinaten des Bildschirms statt. Außerdem kann der Agent 108 auch Texteingaben (vgl. Tastatur) machen und am Bildschirm scrollen (vgl. Maus). Durch diese spezielle universelle Maschinenschnittstelle als Ausführungs-Agent 108 können deutlich mehr Maschinen gesteuert werden, auch wenn eine direkte Anbindung nicht möglich/erwünscht ist.

Anknüpfend an das obige Beispiel kann, um die entsprechenden Parameter einzustellen, der Multimodale Agent 108 (die "Universelle Maschinenschnittstelle") verwendet werden. Genau wie ein Mensch die Parameter umstellen würde, so kann es auch der multimodale Ausführungs-Agent 108. Über Screenshots kann er den HMI-Bildschirm-Inhalt sehen und bestimmen, an welchen Stellen am Bildschirm "geklickt" werden muss, oder ob gescrollt werden muss, da der erwünschte Inhalt/Button erst auf der nächsten Bildschirm-Seite sichtbar ist. Nachdem die Einstellungen übernommen wurden, kann der Bediener 150 informiert werden, dass die Blaskurven-Parameter verändert wurden. Außerdem kann dem Bediener 150 auch begründet werden, warum die Änderungen getätigt wurden, und welche SOPs (Standard Operating Procedures) oder Arbeitsanweisungen dabei verwendet wurden.

Zusätzlich kann der Bediener 150 auch kontaktiert werden (beispielsweise von dem Planungs-Agenten 104, oder von dem Ausführungs-Agenten 108), um eine Freigabe für das Ausführen des Plans einzuholen.

Weitere Ausführungsformen betreffen ein computerlesbares Speichermedium mit darauf aufgezeichneten Programmanweisungen, die, wenn sie von wenigstens einer Computervorrichtung ausgeführt werden, die wenigstens eine Computervorrichtung konfigurieren zum Ausführen des oben beschriebenen computerimplementieren Verfahrens.

Durch den hierin beschriebenen Lösungsansatz und die zugehörige Architektur wird die Möglichkeit gegeben, komplexe Probleme in der Maschinenlinie 130 durch ein Multi-Agenten-System zu lösen.

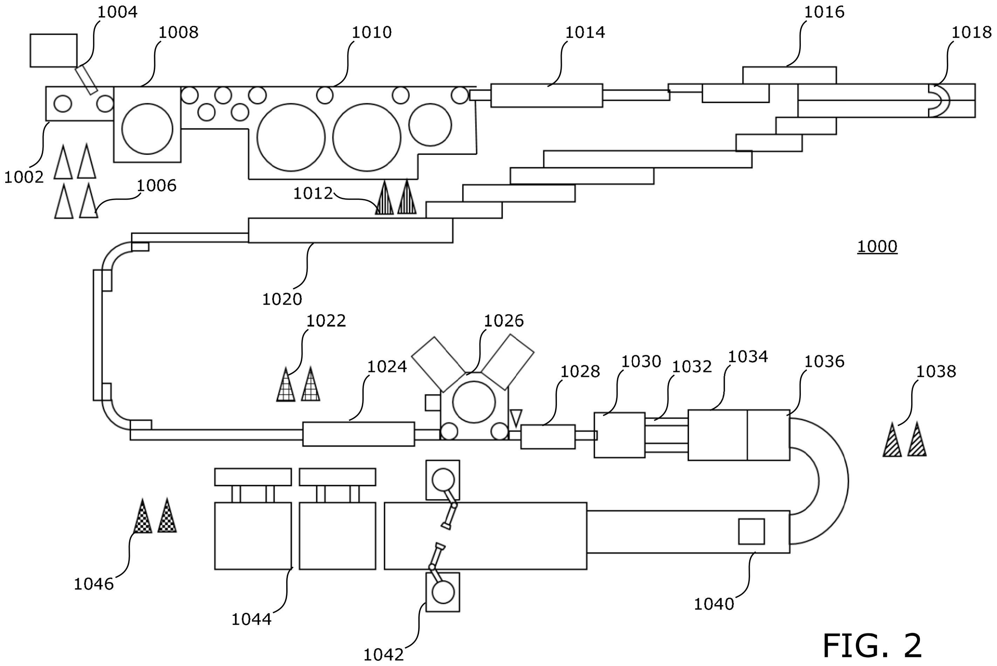

In den folgenden Figuren 2 bis 5 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 2 bis 5 soll nur eine allgemeine Übersicht über Maschinen geben, welche von der Überwachung der hierin beschriebenen Ausführungsformen profitieren können.

Figur 2 zeigt eine beispielhafte Anlagenkonfiguration 1000 für PET-Flaschen oder PET-Behälter und Klebegebinde. Wie in Figur 2 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfernen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer 1044 auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

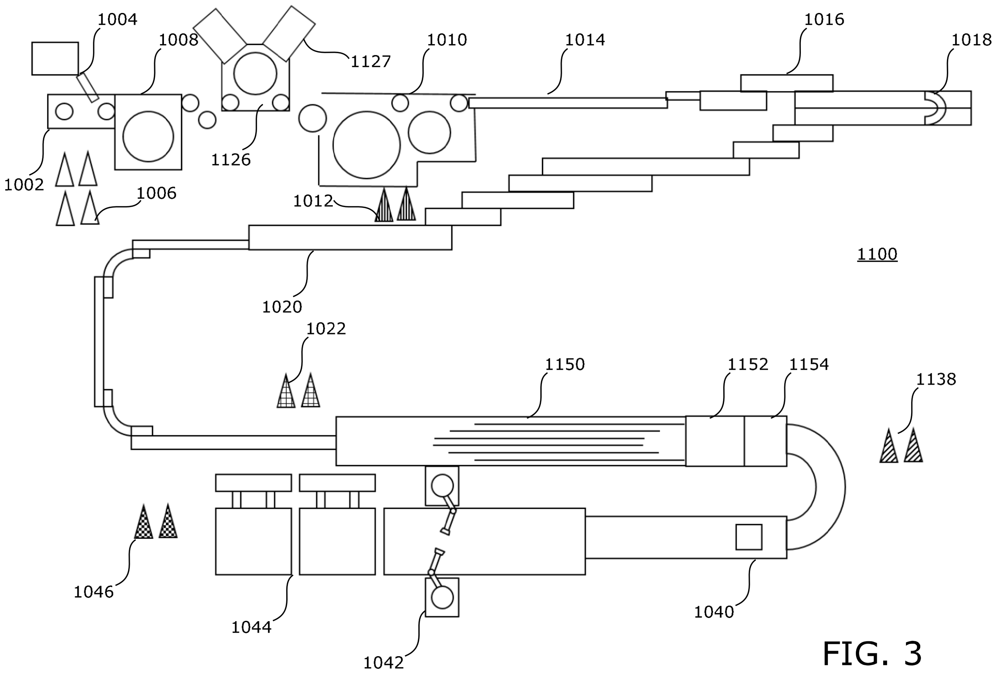

Figur 3 zeigt eine weitere beispielhafte Anlagenkonfiguration 1100 für PET-Behälter und Schrumpfpacker. Die Anlage 1100 aus Figur 3 umfasst viele der Module und Maschinen aus der Anlagenkonfiguration 1000 aus Figur 2, jedoch gibt es einige Unterschiede. Auf die Beschreibung der Module, die bereits in Zusammenhang mit Figur 2 beschrieben sind, wird daher für Figur 3 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

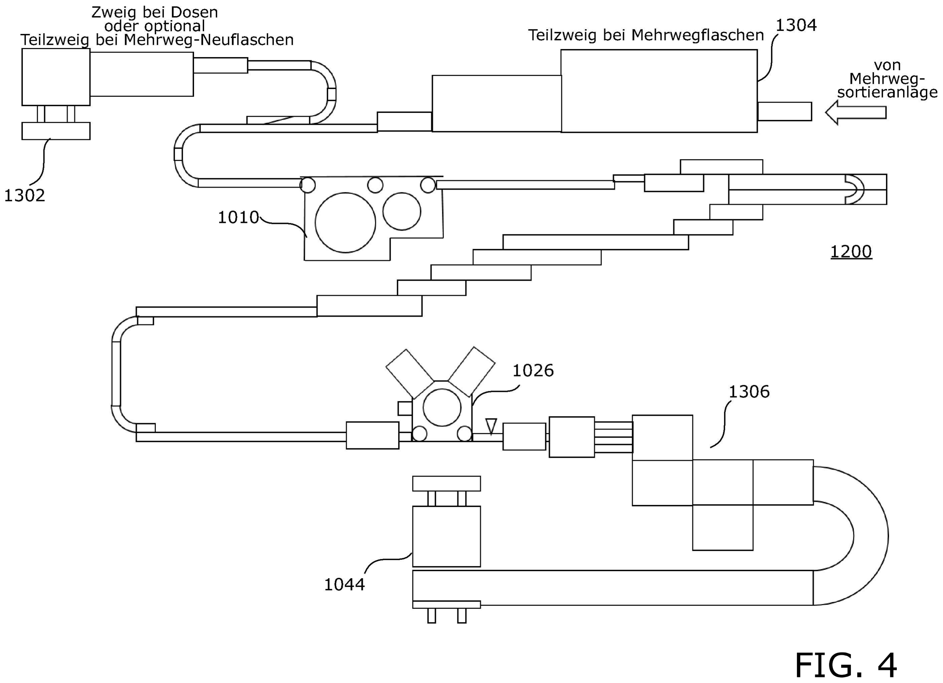

Figur 4 zeigt eine beispielhafte Anlagenkonfiguration 1200 für Dosen oder Glasflaschen. Die beispielhafte Anlagenkonfiguration 1200 aus Figur 4 hat wieder einige Ähnlichkeiten zu den Anlagenkonfigurationen 1000 und 1100 aus Figuren 2 und 3 und die Beschreibung der Anlagenkonfiguration beschränkt sich daher auf die Unterschiede der Anlagenkonfigurationen.

Wie in Figur 4 gezeigt, kann die beispielhafte Anlagenkonfiguration zwei separate Zuführungen umfassen. Eine erste Zufuhr, links in Figur 4, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 4, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

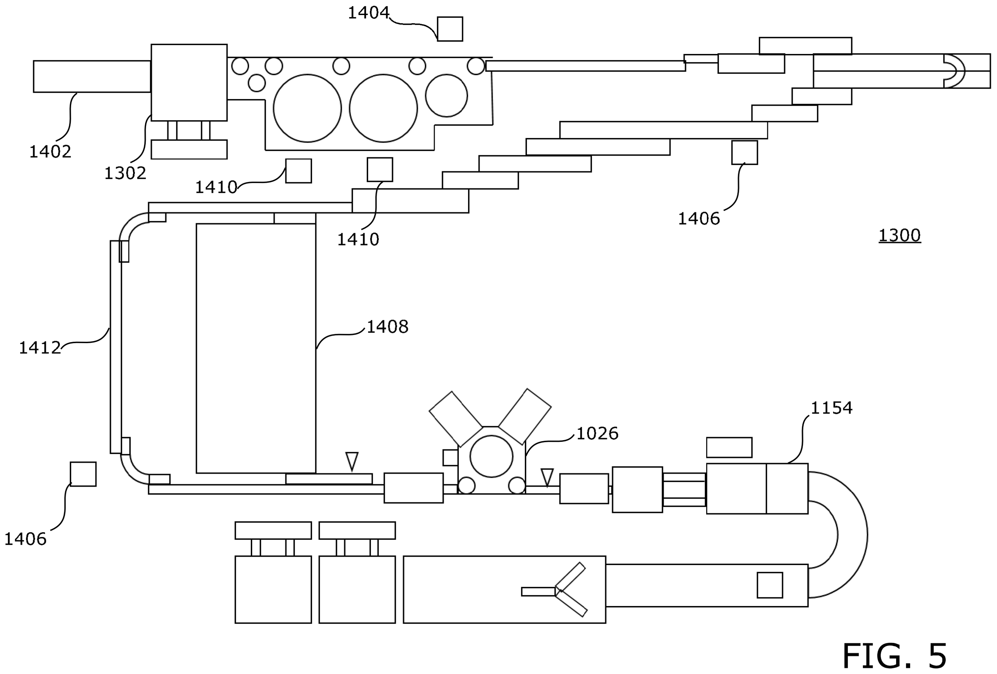

Figur 5 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin 1404 verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. Computerimplementiertes Verfahren zum Überwachen und Steuern komplexer Maschinenlinien, insbesondere eine Maschinenlinie zum Abfüllen und Verpacken von Lebensmitteln und/oder Getränken, wobei das Verfahren umfasst:
Ausführen einer Vielzahl von Kl-Agenten, wobei die Vielzahl von Kl-Agenten wenigstens einen multimodalen Überwachungs-Agenten, einen multimodalen Planungs-Agenten, und einen Ausführungs-Agenten umfassen;
wobei der multimodale Überwachungs-Agent ausgelegt ist zum:
Überwachen einer Vielzahl von Datenquellen einer Maschinenlinie, wobei die Vielzahl von Datenquellen eine Vielzahl von Informationen bezüglich der Maschinenlinie in unterschiedlichen Formaten umfasst,
Erkennen, basierend auf der Überwachung der Vielzahl von Datenquellen, eines ungelösten technischen Problems im Betrieb der Maschinenlinie, und
Kommunizieren des ungelösten technischen Problems an den multimodalen Planungs-Agenten,
wobei der multimodale Planungs-Agent ausgelegt ist zum:
Zugreifen auf einen Systemzustand der Maschinenlinie,
Erstellen eines Plans zur Lösung des ungelösten technischen Problems basierend auf Informationen aus der Vielzahl von Datenquellen, und
Kommunizieren des Plans an den Ausführungsagenten,
wobei der Ausführungs-Agent ausgelegt ist zum:
Ausführen des Plans mittels einer Maschinenschnittstelle, um die Maschinenlinie gemäß dem Plan zu steuern.

2. Computerimplementiertes Verfahren nach Anspruch 1, wobei die unterschiedlichen Formate wenigstens umfassen:
strukturierter Text, insbesondere in einem JSON-, XML- und/oder CSV-Format; und/oder
unstrukturierter Text, insbesondere in menschlicher Sprache beschriebene Lösungen von Problemen in der Maschinenlinie, Arbeitsanweisungen und/oder Dokumentationen; und/oder
Bilder, insbesondere aus Arbeitsanweisungen, aus Kontrollsystemen, Live-Bilder aus der Maschinenlinie, und/oder aus Dokumentationen; und/oder
Videos, insbesondere aus einem Video-Live-Stream aus der Maschinenlinie, aus Arbeitsanweisungen, und/oder aus Dokumentationen; und/oder
Audio, insbesondere menschliche Sprache, und/oder aus Sensoren in der Maschinenlinie.

3. Computerimplementiertes Verfahren nach Anspruch 1 oder 2, wobei der Ausführungsagent ein spezifischer Ausführungsagent für ein Ziel-System in der Maschinenlinie ist und wobei für verschiedene Ziel-Systeme in der Maschinenlinie unterschiedliche Ausführungsagenten verwendet werden, wobei spezifische Ausführungsagenten umfassen:
einen Ausführungsagenten für externe Systeme, der ausgelegt ist, mit externen Systemen mittels einer API zu kommunizieren; und/oder
einen Ausführungsagenten für Vorrichtungen in der Maschinenlinie, der ausgelegt ist, Änderungen an der jeweiligen Vorrichtung mittels direkter Maschinenanbindung vorzunehmen; und/oder
einen multimodalen Ausführungsagenten, der als eine multimodale-Maschinenschnittstelle an ein HMI der Maschinenlinie gekoppelt ist und das HMI automatisiert bedient.

4. Computerimplementiertes Verfahren nach einem der Ansprüche 1 bis 3, wobei die Informationen in der Vielzahl von Datenquellen der Maschinenlinie in Form einer Vektor-Datenbank in einem latenten Raum codiert ist, und wobei der multimodale Überwachungs-Agent und/oder der multimodale Planungs-Agent auf die Informationen in der Vektor-Datenbank zugreifen können, um eine kontext-bezogene Suche durchzuführen.

5. Computerimplementiertes Verfahren nach einem der Ansprüche 1 bis 4, wobei der multimodale Planungs-Agent des Weiteren zum Kommunizieren mit einem Bediener ausgelegt ist, um:
weitere Informationen zu erfragen, die für die Erstellung des Plans nötig sind; und/oder
Benachrichtigungen bezüglich des erkannten ungelösten technischen Problems an den Bediener auszugeben; und/oder
Freigaben für das Ausführen des Plans einzuholen.

6. Computerimplementiertes Verfahren nach einem der Ansprüche 1 bis 5, wobei das Erkennen des ungelösten technischen Problems im Betrieb der Maschinenlinie umfasst:
Erkennen einer Abweichung von einem Sensorwert in der Maschinenlinie; oder
Erkennen einer Abweichung von einer berechneten Kennzahl in der Maschinenlinie; oder
Erkennen einer Anomalie in der Maschinenlinie; oder
Erkennen eines Stillstandes in der Maschinenlinie; oder
Erkennen einer Änderung von Planungsdaten für die Maschinenlinie.

7. Computerimplementiertes Verfahren nach einem der Ansprüche 1 bis 6, wobei die Vielzahl von KI-Agenten des Weiteren wenigstens einen Kritik-Agenten umfassen, der ausgelegt ist zum:
Kommunizieren mit dem multimodalen Planungs-Agenten, und
Analysieren des Plans basierend auf einer oder mehrerer vorgegebenen Randbedingungen, und
wobei der multimodale Planungs-Agent des Weiteren ausgelegt ist zum Anpassen des Plans basierend auf einer Rückmeldung von dem wenigstens einen Kritik-Agenten.

8. Computerimplementiertes Verfahren nach Anspruch 7, wobei eine Vielzahl von Kritik-Agenten ausgeführt werden, die für jeweils unterschiedliche Optimierungsziele und unterschiedliche Randbedingungen ausgelegt sind, und wobei die Vielzahl von Kritik-Agenten den Plan untereinander kommunizieren und gemäß der unterschiedlichen Optimierungsziele und Randbedingungen einen optimierten Plan erstellen und an den multimodalen Planungs-Agenten kommunizieren.

9. Computerimplementiertes Verfahren nach einem der Ansprüche 1 bis 8, wobei wenigstens einer der Kl-Agenten ein Sprachmodell und/oder Large-Language-Modell umfasst und/oder wobei wenigstens einer der Kl-Agenten ein speziell trainiertes neuronales Netzwerk umfasst.

10. Computerimplementiertes Verfahren nach einem der Ansprüche 1 bis 9, wobei der multimodale Überwachungs-Agent, der multimodale Planungs-Agenten, der Ausführungs-Agent und/oder der eine oder die mehreren Kritik-Agenten in einem einzelnen KI-Agenten implementiert sind.

11. Computerlesbares Speichermedium mit darauf aufgezeichneten Programmanweisungen, die, wenn sie von wenigstens einer Computervorrichtung ausgeführt werden, die wenigstens eine Computervorrichtung konfigurieren zum Ausführen des computerimplementieren Verfahrens nach einem der Ansprüche 1 bis 9.

12. System zum Überwachen und Steuern komplexer Maschinenlinien, insbesondere eine Maschinenlinie zum Abfüllen und Verpacken von Lebensmitteln und/oder Getränken, wobei das System umfasst:
eine Maschinenlinie;
eine Recheneinheit, wobei die Recheneinheit angepasst ist zum:
Ausführen einer Vielzahl von Kl-Agenten, wobei die Vielzahl von Kl-Agenten wenigstens einen multimodalen Überwachungs-Agenten, einen multimodalen Planungs-Agenten, und einen Ausführungs-Agenten umfassen;
wobei der multimodale Überwachungs-Agent ausgelegt ist zum:
Überwachen einer Vielzahl von Datenquellen einer Maschinenlinie, wobei die Vielzahl von Datenquellen eine Vielzahl von Informationen bezüglich der Maschinenlinie in unterschiedlichen Formaten umfasst,
Erkennen, basierend auf der Überwachung der Vielzahl von Datenquellen, eines ungelösten technischen Problems im Betrieb der Maschinenlinie, und
Kommunizieren des ungelösten technischen Problems an den multimodalen Planungs-Agenten,
wobei der multimodale Planungs-Agent ausgelegt ist zum:
Zugreifen auf einen Systemzustand der Maschinenlinie,
Erstellen eines Plans zur Lösung des ungelösten technischen Problems basierend auf Informationen aus der Vielzahl von Datenquellen,
Kommunizieren des Plans an den Ausführungsagenten, und
wobei der Ausführungs-Agent ausgelegt ist zum:
Ausführen des Plans mittels einer Maschinenschnittstelle, um die Maschinenlinie gemäß dem Plan zu steuern.
